# EUROPEAN PATENT SPECIFICATION

(11) **EP 3 714 558 B1**
(45) Date of publication and mention of the grant of the patent: **13.03.2024**
(21) Application number: 18879182.6
(22) Date of filing: 20.11.2018
(51) Int. Cl.: H04B 1/40, H04B 1/00

(54) **INTERCONNECTING MODULAR COMPONENTS TO FORM REMOTE UNIT FOR USE WITHIN DISTRIBUTED ANTENNA SYSTEM**
VERBINDEN VON MODULAREN KOMPONENTEN ZUR BILDUNG EINER FERNEINHEIT ZUR VERWENDUNG IN EINEM VERTEILTEN ANTENNENSYSTEM
INTERCONNEXION DE COMPOSANTS MODULAIRES POUR FORMER UNE UNITÉ DISTANTE À UTILISER DANS UN SYSTÈME D'ANTENNES DISTRIBUÉES

(30) Priority: 20.11.2017 US 201762588844 P
(43) Date of publication of application: 30.09.2020
(73) Proprietor: CommScope Technologies LLC, Hickory, NC 28602 (US)
(72) Inventor: STEFANIK, Joerg, Hickory, NC 28602 (US); BERNDORFER, Joachim, Hickory, NC 28602 (US); FACKLER, Karl-Heinz, Hickory, NC 28602 (US)
(74) Representative: Meissner Bolte Partnerschaft mbB
(86) International application number: PCT/US2018/062104
(87) International publication number: WO 2019/100073

(56) References cited:
- WO-A1-2017/188783
- US-A1- 2006 205 342
- US-A1- 2014 169 794
- US-A1- 2014 241 224
- US-A1- 2016 066 314
- US-A1- 2016 156 403
- US-A1- 2017 026 104
- US-A1- 2017 163 343
- US-A1- 2017 164 514

## Description

### CROSS-REFERENCE TO RELATED APPLICATIONS

This application claims the benefit of United States Provisional Patent Application Serial No. 62/588,844 filed on November 20, 2017.

### BACKGROUND

One way that a wireless cellular service provider can improve the coverage provided by a base station or group of base stations is by using a distributed antenna system (DAS). A DAS typically includes one or more master units and one or more remote units that are communicatively coupled to the master units. The one or more master units are typically connected to at least one wireless radio access technology signal source, such as at least one service provider's base station. Various methods of transporting the wireless radio access technology signal from the signal source to the antenna have been implemented in the art. One type of DAS is an analog DAS, in which DAS traffic is distributed between the master units and the remote units in analog form. Another type of DAS is a digital DAS, in which DAS traffic is distributed between the master units and the remote units in digital form. Another type of DAS is a hybrid DAS, in which DAS traffic is distributed between the master units and the remote units using a combination of digital and analog form. Remote units in a DAS are typically communicatively coupled to a master unit via at least one wired communication link, though wireless links are also possible. Related prior art can be found in US2014/169794 A1 and US2017/164514 A1.

### SUMMARY

The invention is defined in independent claims 1 and 5. Optional features are defined in the dependent claims.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram of an exemplary embodiment of a communication system including a distributed antenna system;
Figures 2A-2C are block diagrams of exemplary embodiments of remote units used in distributed antenna systems, such as the exemplary distributed antenna system in Figure 1;
Figure 3A-3C are block diagrams of exemplary embodiments of modular components used in remote units, such as the exemplary remote units in Figures 2A-2C;
Figures 4A-4E are drawings showing exemplary embodiments of modular components and remote units used in distributed antenna systems;
Figure 5 is a flow diagram illustrating one exemplary embodiment of a method for utilizing a modular component within a remote unit of a distributed antenna system; and
Figure 6 is a flow diagram illustrating one exemplary embodiment of a method for utilizing a modular component within a remote unit of a distributed antenna system.

In accordance with common practice, the various described features are not drawn to scale but are drawn to emphasize specific features relevant to the exemplary embodiments. Like reference numbers and designations in the various drawings indicate like elements.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The embodiments described below describe a distributed antenna system (DAS) having at least one master unit and at least one remote unit inside a building, other structure, other enclosed space, or outdoors. Distributed antenna systems (DAS) are frequently used in confined areas to deploy wireless coverage and capacity to mobile devices. DAS systems can include active elements such as master units, extension units, and remote units. Remote units can support more than one band and/or include more than one power amplifier to get higher output power, more sectors, and/or higher performance. Previous remote units have been designed to host three, four, or more bands and the remote unit was designed for these kinds of bands.

Multi-band and/or multi power amplifier DAS remote unit may be inefficient with monetary and/or technical investment due to maximum limits of the remote unit housing. The design and cost structure has mostly been optimized for fully loaded remote units at the maximum stage of expansion. When more bands need to be supported and an additional remote unit is added, it will not become most efficient until it is fully populated. When previous remote units were operating with fewer bands, they would still include the same equipment as a fully populated remote unit, even though much of the equipment was not being used. In exemplary embodiments, this means that infrastructure like cooling, control, power supply, etc. for the remote units are designed for fully loaded systems, regardless of whether all bands and amplifiers are used or populated or not. For de-populated configurations (where the remote unit is not fully loaded) the cost per band is non-proportional because it does not decline proportional with the number of bands as much of the system will remain the same whether the remote unit is partially loaded or fully loaded.

The techniques described herein are useful in connection with the distribution of wireless communications that use licensed radio frequency spectrum, such as cellular radio frequency communications utilizing various radio access technologies (RAT). In exemplary embodiments, radio access technologies (RAT) may operate using various wireless protocols and in various bands of frequency spectrum. For example, the radio access technologies (RAT) may include, but are not limited to, 800 MHz cellular service, 1.9 GHz Personal Communication Services (PCS), Specialized Mobile Radio (SMR) services, Enhanced Special Mobile Radio (ESMR) services at both 800 MHz and 900 MHz, 1800 MHz and 2100 MHz Advanced Wireless Services (AWS), 700 MHz uC/ABC services, two way paging services, video services, Public Safety (PS) services at 450 MHz, 900 MHz and 1800 MHz Global System for Mobile Communications (GSM), Wideband Code Division Multiple Access (W-CDMA), 2100 MHz Universal Mobile Telecommunications System (UMTS), Universal Mobile Telecommunications System Frequency-Division Duplexing (UMTS-FDD), Worldwide Interoperability for Microwave Access (WiMAX), 3rd Generation Partnership Projects (3GPP) Long Term Evolution (LTE), High Speed Packet Access (HSPA), or other appropriate communication services. The system described herein are capable of transporting both Single Input Single Output (SISO) and Multiple Input Multiple Output (MIMO) services at any of the frequencies described above. The systems described herein can support any combination of SISO and MIMO signals across various bands of frequency spectrum. In some example embodiments, the systems described herein may provide MIMO streams for WiMAX, LTE, and HSPA services while only providing SISO streams for other services. Other combinations of MIMO and SISO services are used in other embodiments.

In exemplary embodiments, the upstream unit is communicatively coupled to at least one component of a distributed antenna system which is coupled to at least one remote unit. In other embodiments, the upstream unit is directly coupled with the remote unit or is included with the remote unit in a single device. While exemplary embodiments are described in the context of distributed antenna systems (DAS) within this description, it is understood that exemplary embodiments also apply in distributed base stations having remote radio heads, cloud radio access networks (C-RAN), and/or hybrid DAS/C-RAN systems. In exemplary embodiments, the upstream unit is communicatively coupled to at least one upstream device, such as a base station, either directly or through a fronthaul network. In exemplary embodiments, the upstream unit is at least one of a Common Public Radio Interface (CPRI) base station interface, an Open Base Station Architecture Initiative (OBSAI) base station interface, and an Open Radio Interface (ORI) base station interface. In exemplary embodiments, the upstream unit communicates with an external device. In exemplary embodiments, the external device is one of a Common Public Radio Interface (CPRI) device interface, an Open Base Station Architecture Initiative (OBSAI) device interface, and an Open Radio Interface (ORI) device interface. In exemplary embodiments, the upstream unit communicates with the external device using signals formatted according to at least one of a Common Public Radio Interface (CPRI) standard, an Open Base Station Architecture Initiative (OBSAI) standard, and an Open Radio Interface (ORI) standard.

In exemplary embodiments, the remote unit is multi-standard and capable of receiving at least one signal, converting it to radio frequency (RF), and transmitting the RF signal using at least one antenna. In exemplary embodiments, the remote unit is not specific to a number of channels or an air protocol and does not necessarily require any hardware change when channels are added or removed, or a new modulation type or air protocol is used. In exemplary embodiments, the signals communicated with the upstream device are channelized signals, which are specific to a particular channel. In exemplary embodiments, the channelized signals are baseband data, such as channelized in-phase (I) and quadrature (Q) data in I/Q pairs. The channelized signals are not positioned relative to one another and require additional baseband conversion before RF conversion and transmission can be performed. Specifically, if channelized signals are communicated to a remote unit, additional processing would be required at the remote unit to convert the channelized signals before RF conversion and transmission.

The embodiments described below describe modular components that can be interconnected to form a remote unit within a distributed antenna system that is scalable and modular such that the modular components can be added and removed to provide for scalability at a fine granularity within the remote unit. In exemplary embodiments, the modular components are referred to as "slices". In exemplary embodiments, the modular components include at least one transport interface, at least one signal processor, at least one radio frequency amplification section, and at least one radio frequency filtering section. The ability to add and remove modular components within the remote unit enables a flexible and scalable modular remote unit within a distributed antenna system. For example, a modular component can be added to the remote unit during system expansion to enable additional functionality, such as new bands, higher output power, etc. In exemplary embodiments, the modular components are actively cooled and at least one fan unit can be attached as additional modules. In exemplary embodiments, the modular components are self-contained entities. In exemplary embodiments, optional fan units, band combining units, and user interface units can be placed into the modular components or other areas of the remote antenna unit.

In exemplary embodiments, a primary modular component is the basis of the remote unit and any quantity of secondary modular components are interconnected with the primary modular component to form the remote unit. In exemplary embodiments, the modular components include identical or similar hardware. In exemplary embodiments, software can identify the first modular component having main access to the master unit as the primary modular component and the other modular components as secondary modular components. In exemplary embodiments, the modular components can be mounted in any order and the software can be configured based on the order of the modular components. In exemplary embodiments, the modular components are mounted side by side, on top of each other, or in other ways to form the remote unit. In exemplary embodiments, the arrangement of the modular components within remote units is configured differently for different applications, such as for stealth field installations within traffic signs, light poles, or on other structures. In exemplary embodiments, total weight and cost of the modular components and the remote units made from the modular components are widely scalable.

In exemplary embodiments, power consumption is scalable based on the quantity of modular components within the remote unit and/or requirements of particular applications. In exemplary embodiments, the scalability allows for easier upgrade of even complex configurations. In exemplary embodiments, the weight of each modular component is low enough for a single person to install or remove it from the remote unit. In exemplary embodiments, the depth and width dimensions of modular components is variable. In exemplary embodiments, the modular components are electrically, radio frequency, and mechanically compatible with one another and can be combined and interconnected together to form the remote unit. In exemplary embodiments, the modular components are arranged in such a way that air is forced by fans across fins or heat sinks to cool the system. In exemplary embodiments, the forced air can be either a lower air speed hitting a larger area or a higher air speed hitting a smaller area. In exemplary embodiments, the acoustic noise level can be optimized based on configuration of fans, fins, and/or heat sinks. In exemplary embodiments, forced air active cooling, passive cooling, and/or water or fluid cooling are used. In exemplary embodiments, the modular components are arranged based on cost, environmental, and installation considerations.

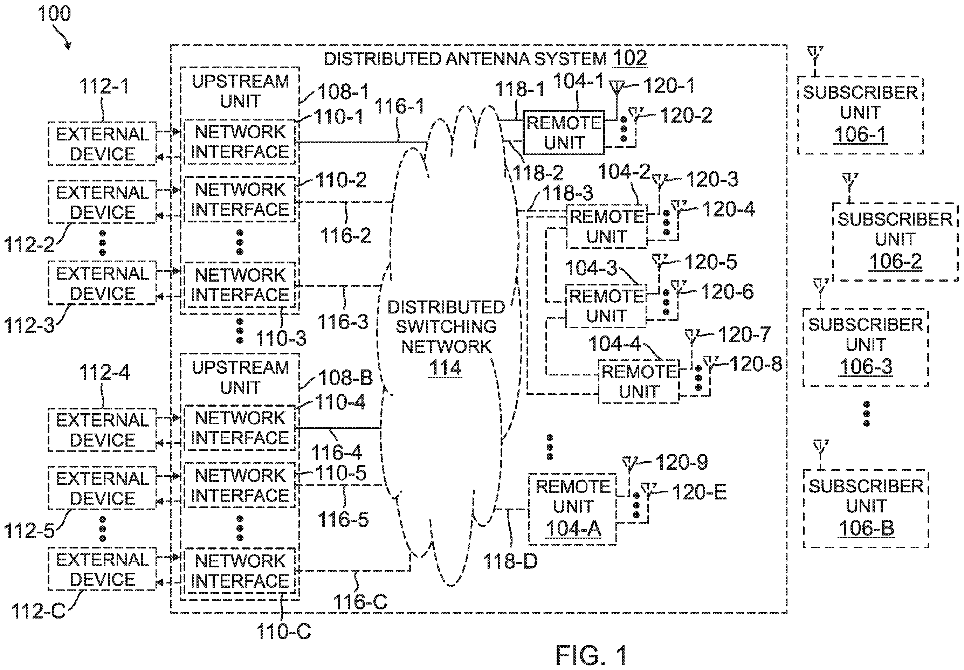

Figure 1 is a block diagram of an exemplary embodiment of a communication system 100 including a distributed antenna system (DAS) 102. The DAS 102 includes at least one remote unit 104 (such as remote unit 104-1, optional remote unit 104-2, optional remote unit 104-3, optional remote unit 104-4, and any quantity of optional remote units 104 through optional remote unit 104-A) communicatively coupled to at least one subscriber unit 106 (such as subscriber unit 106-1 and any quantity of optional subscriber units 106 through optional subscriber unit 106-B), and at least one upstream unit 108 (such as upstream unit 108-1 and any quantity of optional upstream units 108 through optional upstream unit 108-N) within the DAS 102 (such as at least one master unit) having at least one network interface 110 (such as network interface 110-1 and any quantity of optional network interfaces 110 through optional network interface 110-C). In exemplary embodiments, each of the at least one network interface 110 of the at least one upstream unit 108 are communicatively coupled to an external device 112 (such as external device 112-1 and any optional external devices 112 through optional network interface 110-C) external to the DAS 102. In exemplary embodiments, the at least one external device 112 includes a base station.

The DAS 102 is communicatively coupled to the at least one external device 112 (such as at least one base station) through the at least one network interface 110. In exemplary embodiments, the at least one network interface 110 interfaces with the at least one external device 112 using digital, analog, wired, and/or wireless communication. In exemplary embodiments, the at least one upstream unit 108 performs conversion, processing, and/or switching of signals received from the external devices 112 and communicates signals via at least one medium 116 (such as medium 116-1 and any quantity of optional media 116 through optional medium 116-C) through optional distributed switching network 114, and to at least one remote unit 104 (such as remote unit 104-1 through any quantity of optional remote units 104 through optional remote unit 104-A) through at least one medium 118 (such as media 118-1 and any quantity of optional media 118 through optional medium 118-D).

In exemplary embodiments, the media 116 and 118 are any combination of wired and/or wireless media. In exemplary embodiments, at least some of the media 116 and 118 include optical fibers and the communication across the optical fibers is optical. In these embodiments, an electrical to optical conversion and/or an optical to electrical conversion occurs in at least one of the upstream units 108, distributed switching network 114, and/or remote units 104. In exemplary embodiments, at least some of the media 116 and 118 include conductive cables (such as coaxial cable, twisted pair, category cabling, etc.) and the communication across the conductive cables is electrical. In exemplary embodiments, at least some of the communication across the media 116 and 118 is digital. In exemplary embodiments, at least some of the communication across the media 116 and 118 is analog. In exemplary embodiments, any mixture of optical, electrical, analog, and digital communication occurs across the media 116 and 118. In exemplary embodiments, a remote unit 104 may include functionality to convert between digital and analog signals.

In exemplary embodiments, the at least one network interface 110 is communicatively coupled to at least one external device 112 either directly or through an optional fronthaul network. In exemplary embodiments, the optional fronthaul network includes one or more intermediary devices positioned between the at least one network interface 110 and at least one external device 112. In exemplary embodiments, the one or more intermediary devices in the optional fronthaul network are configured to convert channelized uplink signals received from the at least one network interface 110 into an uplink output for the at least one external device 112, such as a CPRI and/or OBSAI link. In exemplary embodiments, the one or more intermediary devices in the optional fronthaul network multiplex multiple channels into one or more upstream links (such as upstream CPRI links). In exemplary embodiments, any number of channels can be multiplexed into any (equal or smaller) number of CPRI links in the optional fronthaul network and be communicated to the at least one upstream device (such as one or more base stations).

Each external device 112 is configured to communicate signals transported through the DAS 102 with the at least one network interface 110. In the forward path, the at least one network interface 110 is configured to receive signals from at least one external device 112. In exemplary embodiments, the at least one network interface 110 is also communicatively coupled to the optional distributed switching network 114 across at least one media 116. As described in more detail below, the network interface 110 is configured to convert first downlink signals from the external device 112 to which it is communicatively coupled into second downlink signals. In exemplary embodiments, the at least one network interface 110 is configured to communicate the second downlink signals to at least one remote unit 104 either directly or through optional distributed switching network 114 or other components of the DAS 102 across a respective medium 116. In exemplary embodiments, CPRI links are used for downlink signals.

Similarly in the reverse path, in exemplary embodiments the at least one network interface 110 is configured to receive an uplink signal across a respective medium 116 from a remote unit 104, either directly or through optional distributed switching network 114. In exemplary embodiments, the uplink signal is a distributed antenna system uplink signal having a transport format used by the DAS 102, such as a digital distributed antenna system transport format or a full band (at radio frequency or intermediate frequency) analog distributed antenna system transport format. In exemplary embodiments, the uplink signal includes one or more channels from at least one remote unit 104.

In exemplary embodiments, optional distributed switching network 114 couples the at least one network interface 110 with the at least one remote unit 104. In other embodiments, the at least one remote unit 104 is directly coupled to the at least one network interface 110. Distributed switching network 114 may include one or more distributed antenna switches or other components that functionally distribute downlink signals from the at least one network interface 110 to the at least one remote unit 104. Distributed switching network 114 also functionally distributes uplink signals from the at least one remote unit 104 to the at least one network interface 110. In exemplary embodiments, the distributed switching network 114 can be controlled by a separate controller or another component of the system. In exemplary embodiments, the switching elements of the distributed switching network 114 are controlled either manually or automatically. In exemplary embodiments, the routes can be pre-determined and static. In other exemplary embodiments, the routes can dynamically change based on time of day, load, or other factors.

In exemplary embodiments, at least some of the uplink signals communicated within the DAS 102 are digital signals. In exemplary embodiments, at least some of the uplink signals communicated within the DAS 102 are analog signals that contains at least one individual channel that is positioned within a set of spectrum that reflects its location within radio frequency spectrum when converted to a radio frequency (RF) signal. Said another way, the channel in each uplink signal is at a different frequency than the other channels to which it may be aggregated in the distributed switching network 114. In exemplary embodiments, at least some of the uplink signals communicated within the DAS 102 across the communication media 118 are analog signals and are converted to a digital signal at an intermediary device positioned within the distributed switching network 114 and communicated to the upstream unit 108A as digital signals.

As will be described in more detail below, remote units 104 is made of at least one modular component. Remote units 104 are communicatively coupled to the distributed switching network 114 across at least one medium 118. Specifically, remote unit 104-1 is communicatively coupled to the distributed switching network 114 across medium 118-1 and optional medium 118-2. Similarly, optional remote unit 104-2 is communicatively coupled to the distributed switching network 114 across optional medium 118-3 and optional remote unit 104-A is communicatively coupled to the distributed switching network 114 across optional medium 118-D. In addition, optional remote unit 104-3 is optionally communicatively coupled to remote unit 104-2, optional remote unit 104-4 is optionally communicatively coupled to remote unit 104-3, and optional remote unit 104-2 is optionally communicatively coupled to optional remote unit 104-4. In exemplary embodiments where optional remote unit 104-4 is communicatively coupled back to optional remote unit 104-2 in a ring configuration, the ring topology can be used for redundancy and/or increased data throughput using an additional reverse path through the ring topology. In exemplary embodiments using a ring topology for redundancy, if one connection between the remote units 104 and the network interface 110, upstream unit 108 (such as a host unit), distributed switching network 114, etc. is lost, the system could still operate using the second connection between the remote units 104 and the network interface 110, upstream unit 108 (such as a host unit), distributed switching network 114, etc. In exemplary embodiments using a ring topology for increased data throughput, different data can go through both sides of the ring topology to increase the data throughput. In embodiments where the optional remote network unit 104-4 is not communicatively coupled back to the optional remote unit 104-2, each of remote unit 104-3 and remote unit 104-4 are communicatively coupled to the distributed switching network through the remote unit 104-2. In exemplary embodiments, each remote unit 104 within the daisy chain of remote units 104 duplicates the digital stream and forwards it to the next remote unit 104 within the daisy chain of remote units 104.

In exemplary embodiments, a star (also known as a hub and spoke) topology can be used, such as with remote unit 104-1, optional remote unit 104-2, and optional remote unit 104-A. In exemplary embodiments, the remote units 104 in the star configuration can be connected to distributed switching network 114, at least one network interface 110, and/or at least one upstream unit 108 in the star configuration using a splitter device (such as an optical wavelength division multiplexer (WDM) splitter when using optical transport or a network switch (such as an Ethernet switch) when using electrical transport). In embodiments implementing a WDM splitter, each of the remote units 104 in the star configuration may use a different set of wavelengths.

In exemplary embodiments, some or all of the remote units 104 receive a single downlink signal from the distributed switching network 114, directly from a network interface 110, or from another remote unit 104 (such as with optional remote unit 104-2, optional remote unit 104-3, and optional remote unit 104-4). In exemplary embodiments, some or all of the remote units 104 include components configured to convert between at least one downlink signal received through the DAS 102 and at least one radio frequency band as well as at least one radio frequency antenna 120 (such as radio frequency antenna 120-1 and any quantity of optional radio frequency antennas 120 through radio frequency antenna 120-E) configured to transmit and receive signals in the at least one radio frequency band to at least one subscriber unit 106 (such as subscriber unit 106-1 and any quantity of optional subscriber units 106 through optional subscriber unit 106-B). In exemplary embodiments, the downlink signal is an aggregate signal including signals from multiple upstream devices. In exemplary embodiments, multiple downlink radio frequency channels are supported on a single band (such as for example two W-CDMA channels on a single band).

In the downstream, each remote unit 104 is configured to convert at least one downlink signal into a downlink radio frequency (RF) signal in a radio frequency band. In exemplary embodiments, this may include digital to analog converters and oscillators. Each remote unit 104 is further configured to transmit the downlink radio frequency signal in the radio frequency band to at least one subscriber unit using at least one radio frequency antenna 120. In a specific exemplary embodiment, remote unit 104-1 is configured to convert the downlink signal received either from the distributed switching network 114, directly from a network interface 110, or from another remote unit 104 into a downlink radio frequency signal in a radio frequency band. Remote unit 104-1 is further configured to transmit the downlink radio frequency signal in a radio frequency band using a radio frequency band radio frequency antenna 120-1 to at least the one subscriber unit 106-1. In exemplary embodiments, the remote unit 104-1 is configured to transmit one downlink radio frequency signal to the one subscriber unit 106-1 using a radio frequency antenna 120-1 and another radio frequency signal to another subscriber unit 106 using another radio frequency antenna 120-2. In exemplary embodiments, other combinations of radio frequency antennas 120 and other components are used to communicate other combinations of radio frequency signals in other various radio frequency bands to various subscriber units 106, such as but not limited to using multiple radio frequency antennas 120 to communicate with a single subscriber unit 106.

Similarly in the reverse path, in exemplary embodiments each remote unit 104 is configured to receive uplink radio frequency signals from at least one subscriber unit 106 using at least one radio frequency antenna 120. Each remote unit 104 is further configured to convert the radio frequency signals to at least one uplink signal. In exemplary embodiments, at least one remote unit 104 is further configured to aggregate the at least one uplink signal with another uplink signal received from another remote unit 104 into an aggregate uplink signal (such as remote unit 104-2 receiving uplink signals from remote unit 104-3) and further configured to communicate the at least one uplink signal and/or the aggregate uplink signal across at least one medium 118 to the distributed switching network 114. In exemplary embodiments, remote units 104 multiplex uplink signals in different bands onto the same interface for communication to the next upstream element. In other exemplary embodiments, the remote unit 104 aggregates (i.e. sums/combines) uplink signals in an intelligent manner. In exemplary embodiments, multiple uplink radio frequency channels are supported on a single band (such as for example two W-CDMA channels on a single band).

In exemplary embodiments, a master reference clock is distributed between the various components of the DAS 102 to keep the various components locked to the same clock. In exemplary embodiments, a master reference clock is provided to the at least one external device 112 via at least one network interface 110 so that the at least one external device 112 can lock to the master reference clock as well. In other exemplary embodiments, the master reference clock is provided from at least one external device 112 to the DAS 102 via the at least one network interface 110. In exemplary embodiments, the master reference clock is generated within a component of the DAS 102, such as an upstream unit 108, a remote unit 104, or somewhere within the distributed switching network 114.

In exemplary embodiments, the DAS 102A is a digital distributed antenna system including a remote unit 104 configured to: (1) receive radio frequency signals from a subscriber unit 106; (2) convert the radio frequency signals into digital signals; and (3) communicate the digital signals through the DAS 102 and toward the at least one network interface 110. In exemplary embodiments, the DAS 102 is a hybrid distributed antenna system including: (A) a remote unit 104 configured to: (1) receive radio frequency signals from a subscriber unit 106; (2) convert the radio frequency signals into analog signals; and (3) communicate the analog signals through the DAS 102; and (B) an intermediary device (which could be positioned within the optional distributed switching network 114) configured to: (1) receive the analog signals from the remote unit 104; (2) convert the analog signals into digital signals; and (3) communicate the analog signals through the DAS 102 and toward the at least one external device 112. In exemplary embodiments, the DAS 102 is an analog distributed antenna system including a remote unit 104 configured to: (1) receive radio frequency signals from a subscriber unit 106; (2) convert the radio frequency signals into analog signals; and (3) communicate the analog signals through the DAS 102 and toward the at least one network interface 110.

In exemplary embodiments, the network interface 110 is a base station configured to receive the uplink signal. In exemplary embodiments, the uplink signal is formatted according to at least one of a Common Public Radio Interface (CPRI) standard, an Open Base Station Architecture Initiative (OBSAI) standard, and an Open Radio Interface (ORI) standard. In exemplary embodiments, the network interface 110 is one of a Common Public Radio Interface (CPRI) device interface, an Open Base Station Architecture Initiative (OBSAI) device interface, and an Open Radio Interface (ORI) device interface. In other exemplary embodiments, the network interface 110 is an analog base station that is configured to receive either intermediate frequency analog signals or radio frequency analog signals from the at least one network interface 110. In these exemplary embodiments, the uplink signal that is communicated to the external device 112 is either an intermediate frequency analog signal or a radio frequency analog signal.

In exemplary embodiments, each remote unit 104 radiates RF signals within a coverage area. The coverage areas from all of the remote units 104 together form the DAS coverage area for the DAS. In exemplary embodiments, the coverage areas are substantially confined within a building structure or other area to avoid interference with the coverage areas of other base stations, DAS, etc. In exemplary embodiments, the exterior walls of a building, structure, or other enclosed space are more difficult for RF signals to penetrate and the signals become substantially attenuated by the exterior walls. In exemplary embodiments, the distributed antenna system is within a building having exterior walls. In exemplary embodiments, the coverage area of the distributed antenna system is substantially within the exterior walls of the building. In exemplary embodiments, the coverage area of the distributed antenna system is outdoors, where signals may be attenuated by natural obstacles and man made structures, by antenna separation, and/or antenna characteristics.

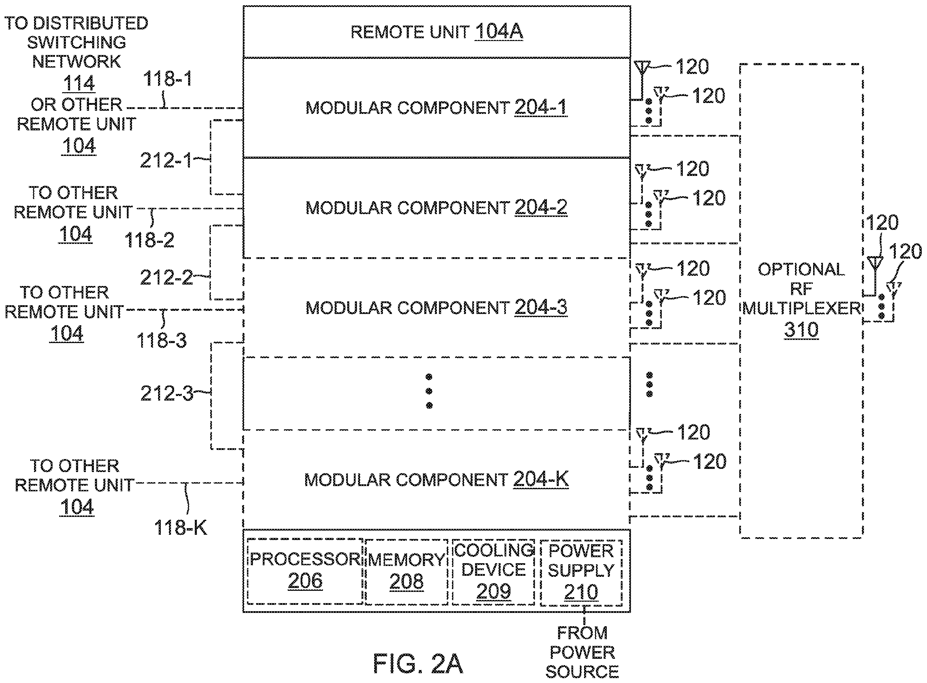

Figures 2A-2C are block diagrams of exemplary embodiments of remote units 104 used in distributed antenna systems, such as the exemplary distributed antenna system (DAS) 102 described above. Each of Figures 2A-2C illustrates a different embodiment of a remote unit, labeled 104A-104C respectively.

Figure 2A is a block diagram of an exemplary embodiment of a remote unit 104A used in a distributed antenna system (DAS) 102. The remote unit 104A includes at least one modular component 204 (such as modular component 204-1 and any quantity of optional modular components 204 through optional modular component 204-K), optional processor 206, optional memory 208, optional cooling device 209, and optional power supply 210. In exemplary embodiments, components of the remote unit 104A are implemented at least in part by optional processor 206 and optional memory 208. In exemplary embodiments, the optional cooling device 209 (such as a fan unit, heat exchanger, heatsink, other active or passive cooling device, etc.) is used to cool various components of the remote unit 104. In exemplary embodiments, optional power supply 210 is used to power the various components of the remote unit 104. In exemplary embodiments, a plurality of modular components 204 are physically connected together, such as by screws, bolts, or other fasteners. In exemplary embodiments, the remote unit 104A includes a housing with a plurality of slots/racks and the modular components are positioned within the slots.

In exemplary embodiments, a plurality of modular components 204 are interconnected together (such as daisy chained together) using at least one interlink 212 (such as where modular component 204-1 is connected to modular component 204-2 by at least one interlink 212-1, modular components 204-2 is connected to modular component 204-3 by at least one interlink 212-2, and modular component 204-3 is connected to modular component 204-K by at least one interlink 212-3). In exemplary embodiments, the modular components 204 are interconnected using connectors and cables, direct connects, wireless links, through a backplane, or in other ways. In exemplary embodiments, secondary modular components 204 of a remote unit 104 are connected to a primary modular component 204 in a daisy chain, star or ring configuration depending on reliability and throughput needs. In exemplary embodiments, at least one of the modular components are connected to other remote units 104A through at least one medium 118. In exemplary embodiments, the modular components 204 are similar from a architecture and/or hardware perspective and individual modular components 204 can be configured as primary modular components or secondary modular components depending on the firmware and/or software configuration.

In exemplary embodiments, modular component 204-1 receives at least one downlink signal from at least one upstream unit (such as a network interface 110, another remote unit 104, a component within the distributed switching network 114, or another component) through media 118-1. In exemplary embodiments, more than one modular component 204 is connected to the at least one upstream unit (such as a network interface 110, another remote unit 104, a component within the distributed switching network 114, or another component) through media 118-1.

In exemplary embodiments where the downlink signal is an optical signal, the modular component 204-1 converts the downlink signal from an optical format to an electrical format. In exemplary embodiments, more input lines and/or more modular components 204 are included in the remote unit 104. In exemplary embodiments, the modular component 204-1 splits apart an aggregate downlink signal into at least one downlink signal for eventual transmission as a radio frequency on at least one radio frequency antenna. In exemplary embodiments, the modular component 204-1 splits apart the aggregate downlink signal into a plurality of downlink signals that are sent to a plurality of modular components 204 for eventual transmission as radio frequency signals at radio frequency antennas 120. In exemplary embodiments, at least one optional multiplexer 310 (described in more detail below) is included to multiplex signals onto fewer antennas in the downlink and to de-multiplex signals from fewer antennas in the uplink.

In exemplary embodiments, modular component 204-1 receives at least one uplink signal from at least one radio frequency antenna 120. In exemplary embodiments, the modular component 204-1 receives a plurality of uplink signals from a plurality of radio frequency antennas 120. In exemplary embodiments, the modular component 204-1 aggregates at least one uplink signal received from a radio frequency antenna 120-1 with another uplink signal received from another radio frequency antenna 120. In exemplary embodiments, the modular component 204-1 aggregates a plurality of uplink signals into a single aggregate uplink signal. In exemplary embodiments, the uplink signal or the aggregate uplink signal is converted from electrical signals to optical signals before being communicated toward the at least one network interface 110 directly or through the distributed switching network 114. In other embodiments, the aggregate uplink signal is communicated as electrical signals toward the at least one network interface 110 directly or through the distributed switching network 114. In exemplary embodiments, the aggregate uplink signal is converted to optical signals at another place in the DAS 102.

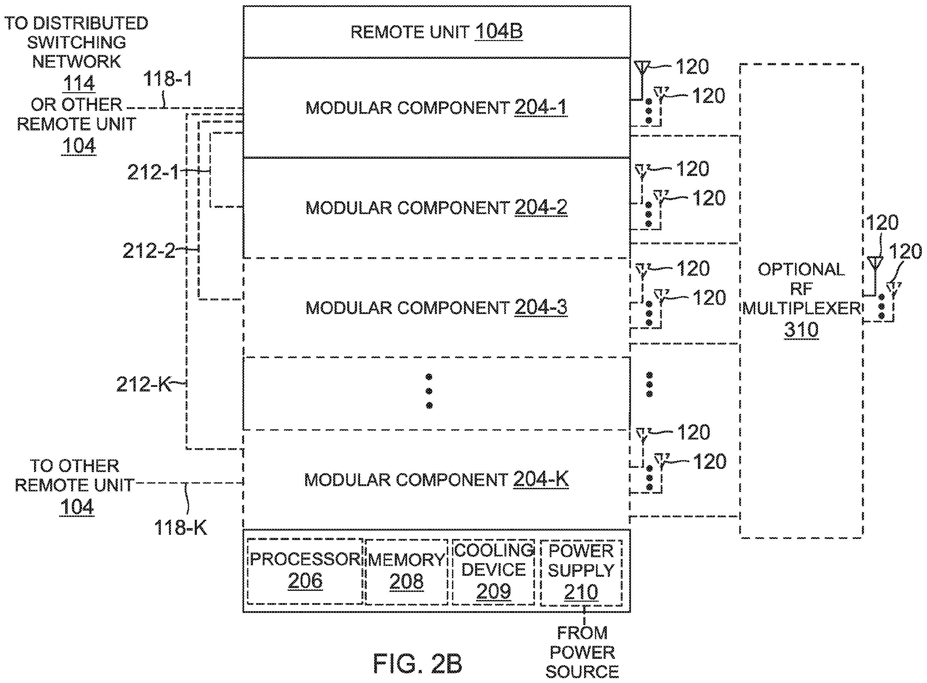

Figure 2B is a block diagram of an exemplary embodiment of a remote unit 104B used in a distributed antenna system (DAS) 102. The remote unit 104B includes at least one modular component 204 (such as modular component 204-1 and any quantity of optional modular components 204 through optional modular component 204-K), optional processor 206, optional memory 208, and optional power supply 210. In exemplary embodiments, components of the remote unit 104B are implemented at least in part by optional processor 206 and optional memory 208. In exemplary embodiments, optional power supply 210 is used to power the various components of the remote unit 104B. Remote unit 104B includes similar components to remote unit 104A and operates according to similar principles and methods as remote unit 104A described above. The differences between remote unit 104B and remote unit 104A is that modular component 204-1 is connected to each of optional modular component 204-2, optional modular component 204-3, and optional modular component 204-K in a tree topology.

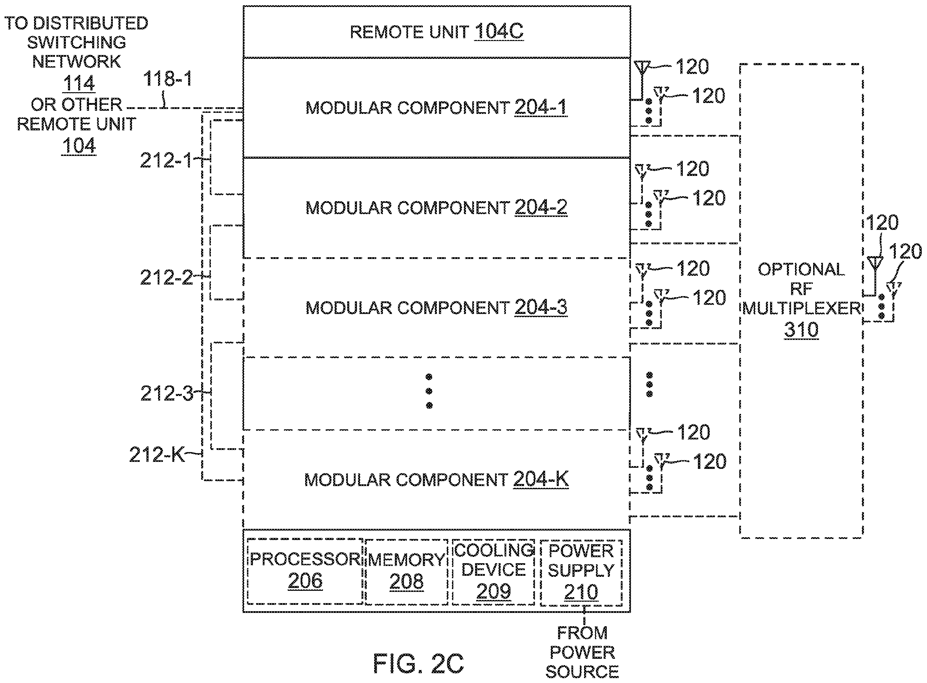

Figure 2C is a block diagram of an exemplary embodiment of a remote unit 104C used in a distributed antenna system (DAS) 102. The remote unit 104C includes at least one modular component 204 (such as modular component 204-1 and any quantity of optional modular components 204 through optional modular component 204-K), optional processor 206, optional memory 208, and optional power supply 210. In exemplary embodiments, components of the remote unit 104C are implemented at least in part by optional processor 206 and optional memory 208. In exemplary embodiments, optional power supply 210 is used to power the various components of the remote unit 104C. Remote unit 104C includes similar components to remote unit 104A and operates according to similar principles and methods as remote unit 104A described above. The differences between remote unit 104C and remote unit 104A is that optional modular component 204-K is connected back to modular component 204-1 in a ring topology. This ring topology can be used for redundancy and/or increased data throughput.

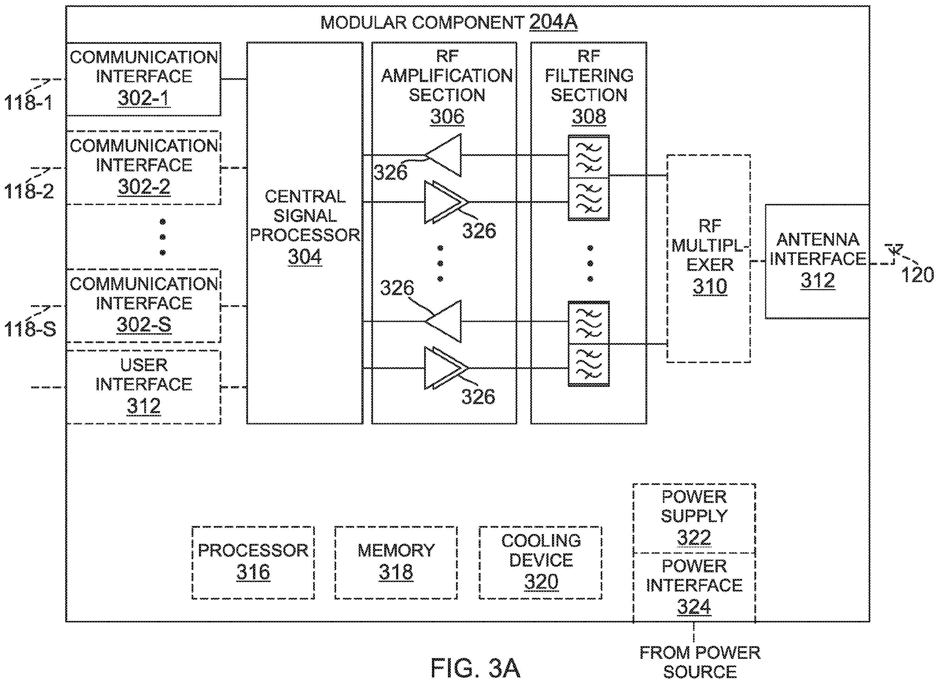

Figure 3A-3B are block diagrams of exemplary embodiments of modular components used in remote units, such as the exemplary remote units 104, 104A, 104B, and 104C in Figures 1 and 2A-2C. Each of Figures 3A-3B illustrates a different embodiment of a modular component, labeled 204A-204C respectively.

Figure 3A is a block diagram of an exemplary embodiment of a modular component 204A used in a remote unit 104 of the distributed antenna system (DAS) 102 described above. The modular component 204A includes at least one communication interface 302 (such as communication interface 302-1 and any quantity of optional communication interfaces 302 through communication interface 302-S), at least one central signal processor 304, at least one radio frequency (RF) amplification section 306, at least one radio frequency (RF) filtering section 308, optional at least one RF multiplexer 310, antenna interface 312, optional user interface 314, optional processor 316, optional memory 318, optional cooling device 320, optional power supply 322, and optional power interface 324. In exemplary embodiments, the at least one central signal processor 304 and/or other components of the modular component 204A are implemented at least in part by optional processor 316 and optional memory 318. In exemplary embodiments, optional cooling device 320 (such as a heatsink, heat exchanger, fan, other passive or active cooling device, etc.) is used to cool various components of the modular component 204A. In exemplary embodiments, optional power supply 322 is used to power the various components of the modular component 204A and receives power (such as DC or AC power) from optional power interface 324.

In exemplary embodiments, at least one modular component 204A terminates at least one link to at least one network interface 110 through at least one communication interface 302. In exemplary embodiments only a single modular component 204A within a remote unit 104 terminates a single link to the at least one network interface 110 to minimize connectors on the modular components 204. In these embodiments, the link to another remote unit 104 can be implemented on one ore more secondary modular components 204. In exemplary embodiments, more than one modular component 204A terminates links to at least one network interface 110 to enable additional capacity and/or redundancy in the DAS 102 using at least one additional communication interface 302. In exemplary embodiments, at least one communication interface 302 is communicatively coupled with upstream devices and is considered an upstream interface. In exemplary embodiments, at least one communication interface 302 is communicatively coupled with at least one other modular component 204 of the remote unit 104.

In exemplary embodiments, at least one communication interface 302 is communicatively coupled with at least one downstream component (such as at least one other modular component 204 of another remote unit 104). In exemplary embodiments, the at least one communication interface 302 can include a transceiver device (such as an optical and/or electrical transceiver) communicates with another transceiver device. In exemplary embodiments, the at least one communication interface 302 is flexibly used as a data connection to at least one network interface 110, as an interlink between modular components 204 within the same remote unit 104, and/or for cascading and/or daisy chaining various components within the DAS 102. In exemplary embodiments, this enables the data link performance to be selected according to data rate needs, independent of interlink or cascading architecture. In exemplary embodiments, the communication interface 302 can be implemented using optical and/or electrical components. In exemplary embodiments, at least one communication interface 302 includes a transceiver (such as an optical transceiver for optical media or an Ethernet port for Ethernet communication) that enables a data connection to at least one network interface 110 and/or an upstream unit 108 (such as a master unit). In exemplary embodiments, at least one communication interface 302 is an interlink used as a data connection between the modular components 204.

In exemplary embodiments, the at least one modular component 204 is communicatively coupled to at least one network interface 110 (such as within a master unit) by at least one medium 118, which can be a conductive cable, fiber optic cable, etc. In exemplary embodiments, digitized signals representing radio frequency (RF) signals are transmitted over the at least one medium 118 between the at least one network interface 110 and the modular component 204A within the remote unit 104 of the DAS 102. In exemplary embodiments, either the whole RF band is transmitted or only relevant portions of the RF spectrum in order to save bandwidth. In exemplary embodiments, the at least one communication interface 302 only picks up a particular subset of frequencies to be used by the particular modular component 204A from a whole range of frequencies. In exemplary embodiments, the reminder of the frequencies will be bypassed and picked up by another modular component 204A (such as a second, third, or fourth modular component 204).

In exemplary embodiments, the at least one central signal processor 304 is configured to convert and process signals between the at least one communication interface 302 and the RF amplification section 306. In exemplary embodiments, the at least one central signal processor 304 is configured to convert between signals interfaced with the at least one network interface 110 and analog radio frequency signals interfaced with the RF amplification section 306. In exemplary embodiments, the at least one central signal processor 304 is configured to convert downlink digital signals received at the at least one network interface 110 into the downlink analog radio frequency signals within the downlink spectrum for amplification by the RF amplification section 306. In exemplary embodiments, the at least one central signal processor 304 is configured to convert uplink analog radio frequency signals received from the RF amplification section 306 to uplink digital signals for transmission to the at least one central signal processor 304.

In exemplary embodiments in the downlink, the at least one central signal processor 304 is also configured to split downlink data into at least a first portion and a second portion and to (1) convert a first portion of the downlink data to analog signals for amplification using the RF amplification section 306; and (2) communicate the second portion to at least one other modular component 204 within the remote unit 104 or to at least one other modular component within a different remote unit 104. In this way, only the relevant data (second portion) is sent along, rather then all the data. In exemplary embodiments in the downlink, the at least one central signal processor 304 is configured to communicate a copy of the downlink to at least one other modular component 204 within the remote unit 104 or to at least one other modular component within a different remote unit 104. It may be useful to communicate all the data in exemplary embodiments implementing cascading from one remote unit 104 to another remote unit 104 that is implementing both bands. In exemplary embodiments, one modular component 204 within a remote unit 104 is used to serve one RF band while another modular component 204 within a remote unit 104 is used to serve another RF band. In exemplary embodiments, data splitting, moving, and copying are used in various ways at various remote modular components 204 within one or more remote units 104 depending on the system configuration. In exemplary embodiments, it is advantageous for signal processing and pre-distortion for at least two RF bands to be on a single central signal processor 304. In exemplary embodiments, the at least one central signal processor is configured to control the other components of the at least one modular component 204.

In exemplary embodiments in the uplink, the at least one central signal processor 304 is configured to receive any uplink data traffic from other modular components 204 (either within the remote unit 104 or from another remote unit 104), combine (such as by summation, multiplexing, or other assembly or combination) the data together, and send it back to at least one network interface 110 and/or an upstream unit 108 (such as a master unit)

In exemplary embodiments, the RF amplification section 306 is configured to amplify at least a first portion of the downlink radio frequency signals using at least a first radio frequency amplifier 326. In exemplary embodiments, the RF amplification section 306 includes additional radio frequency amplifiers 326 used to amplify additional portions of the downlink radio frequency signals. In exemplary embodiments the RF amplification section 306 includes a plurality of radio frequency amplifiers 326 both operating on the same band, such as in a dual amplifier 326 configuration with a power combiner on the end to enable double power for implementations where you want more power than a single modular component 204 can provide. In exemplary embodiments implementing dual (or more) amplifiers 326, the at least one central signal processor 304 can output the same signal to two (or more) power amplifiers 326 in the RF amplification section 306. In exemplary embodiments, you can use multiple power amplifiers 326 to have more than one band, the same band with double power, a single band, or a multiple-input multiple-output (MIMO) application where you have the same band, but different information over two or more amplifiers 326. In exemplary embodiments implementing higher order MIMO, more than two amplifiers 326 may be used.

In exemplary embodiments, it is cost effective to realize RF amplification for at least two bands in a single RF amplification section 306. In exemplary embodiments, the modular component 204 facilitates two bands and more than two bands are required, additional modular components 204 are added to the remote unit 104.

In exemplary embodiments, the RF filtering section 308 is configured to filter the at least the first portion of the downlink radio frequency signals using at least a first radio frequency filter. In exemplary embodiments, the RF amplification section 306 and/or central signal processing section 304 is configured to perform pre-distortion and/or analog linearization on the signals. In exemplary embodiments, the RF filtering section 308 is configured to provide the at least the first portion of the downlink radio frequency signals to at least one antenna 120 for transmission to at least one subscriber unit. In exemplary embodiments, the RF filtering section 308 is configured to perform combining and/or filtering. In exemplary embodiments, the antenna interface 312 is used to interface the RF signals with the antenna 120.

In exemplary embodiments, a primary modular component 204A within a remote unit 104 communicates a duplicate of the downlink spectrum from the network interface 110 and/or upstream unit 108 to at least one secondary modular component 204. In exemplary embodiments, each secondary modular component 204 receives the duplicate of the downlink spectrum and selects the relevant data to transmit. In exemplary embodiments, the primary modular component 204A preselects the transmit spectrum individually for each secondary modular component 204 and passes it over at least one communication interface 302 to at least one secondary modular component 204. In exemplary embodiments, each secondary modular component 204 sends its radio frequency information to the primary modular component 204A, where the individual data streams are serialized for transmission to at least one network interface 110 and/or upstream unit 108.

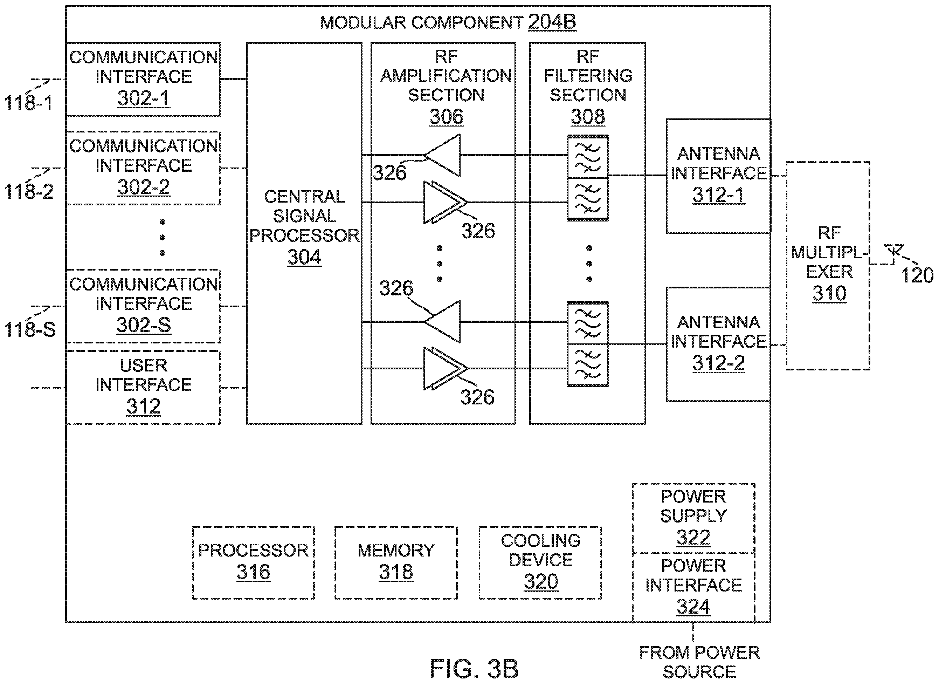

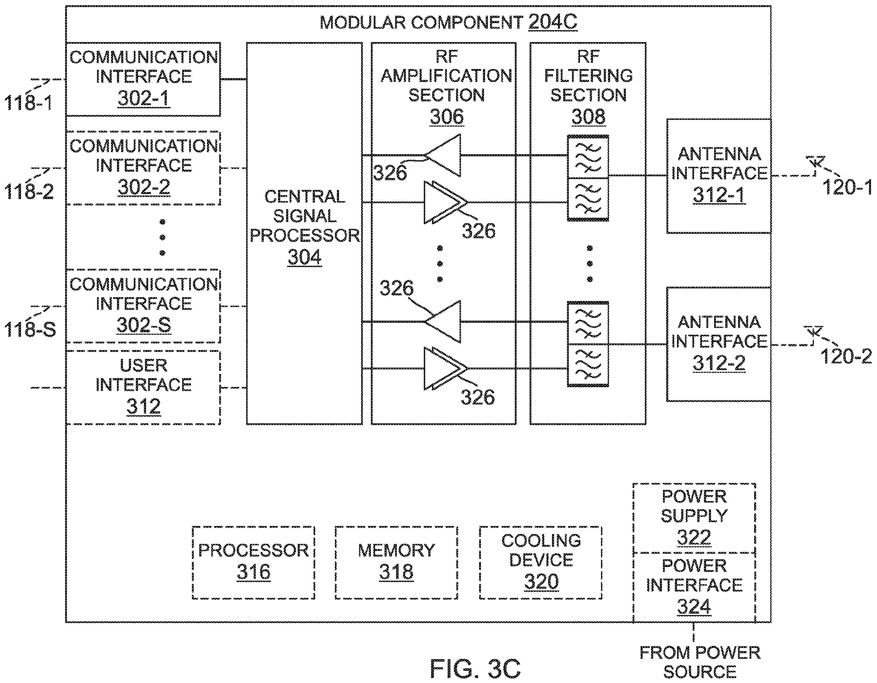

In exemplary embodiments, RF outputs of each modular component 204 can be used directly (such as to feed antenna 120) or can be combined into one or more ports using optional RF multiplexer 310 (or other band combining device). In exemplary embodiments, the optional RF multiplexer 310 (or other band combining device) is within the modular component 204 (such as shown in modular component 204A of Figure 3A). In other embodiments, the optional RF multiplexer 310 (or other band combining device) is external to the modular component 204 (such as shown in modular component 204B of Figure 3B). In other embodiments, no RF multiplexer 310 is included (such as shown in modular component 204C of Figure 3C). In exemplary embodiments, the optional RF multiplexer 310 (or other band combining device) is placed directly on top of or on the side of the modular components 204.

In exemplary embodiments, the user interface 314 is configured to allow local access to the modular component 204, including any alarm input/output, Ethernet device, power supply for external devices, or auxiliary port. In exemplary embodiments, additional equipment (such as a webcam or wireless router) is connected to the user interface 314. In exemplary embodiments, the user interface 314 is provided on the face plate of each modular component 204. In exemplary embodiments, the user interface 314 includes a single connector for multiple uses for local access and/or for customer alarming control for IP, ports, dry contacts, etc. In exemplary embodiments, the user interface 314 can provide power to external devices while also providing high data rates. In exemplary embodiments, the user interface 314 is wireline, optical, or electrical. In exemplary embodiments where the user interface 314 implements auxiliary port functionality (such as an Ethernet interface), a configurable data-tunnel with adaptive data rate can be used from the modular component 204 within a remote unit 104 to a network interface 110, an upstream unit 108, and/or another modular component 204 within the same remote unit 104 or a different remote unit 104. In exemplary embodiments, the data-tunnel is a virtual private network (VPN).

In exemplary embodiments, the user interface 314 is configured to be communicatively coupled to an external user interface box made specifically for a customers customized deployment without having influence on the remote unit 104 and/or modular component 204. In exemplary embodiments, the external user interface box includes individual interfaces for various user devices, which enables the modular components 204 to remain consistent while still providing for specific user needs. In exemplary embodiments, a single external user interface box is communicatively coupled to the user interface 314 on a plurality of modular components 204.

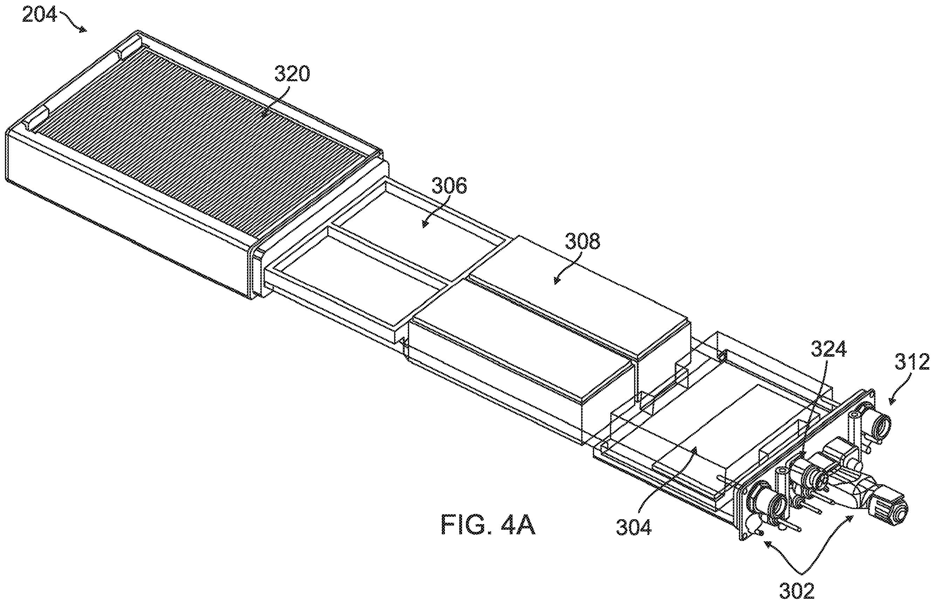

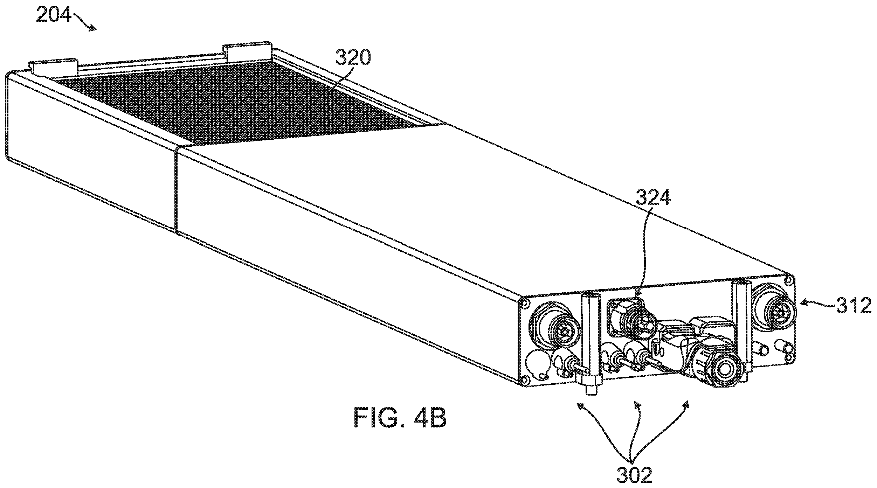

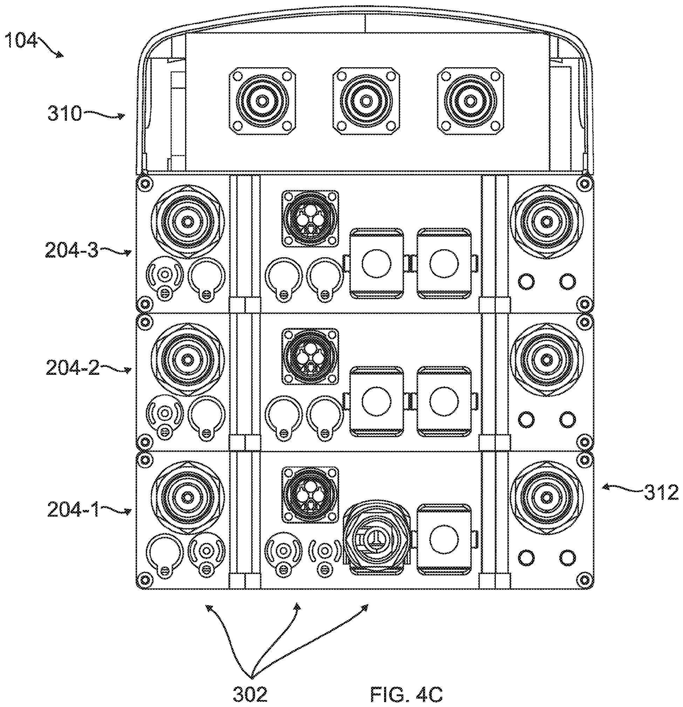

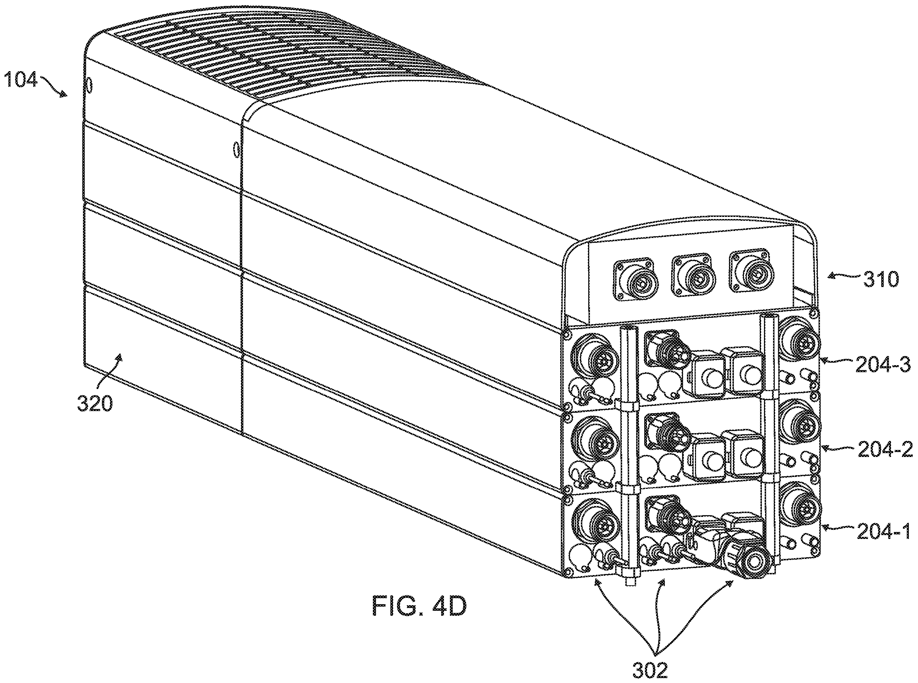

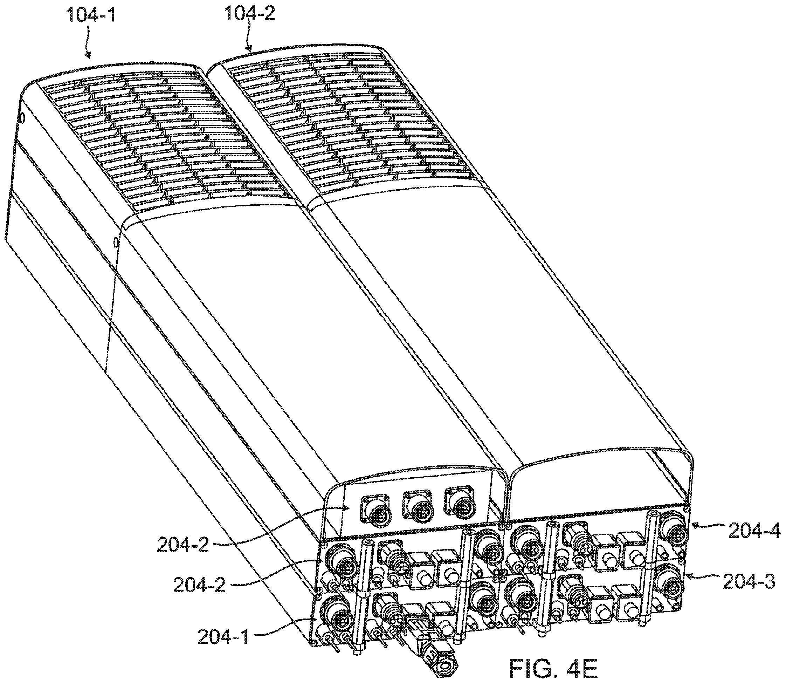

Figures 4A-4E are drawings showing exemplary embodiments of modular components and remote units used in distributed antenna systems. Figure 4A is a perspective view of an exemplary modular component 204 with the components described above, including at least one communication interface 302, at least one central signal processor 304, at least one radio frequency (RF) amplification section 306, at least one radio frequency (RF) filtering section 308, optional cooling device 320, and optional power interface 324. Figure 4B is a perspective view of the exemplary modular component 204 shown in Figure 4A with a case covering the various components. Figure 4C is a front view of an exemplary remote unit 104 created from a plurality of modular components 204 (including modular component 204-1, modular component 204-2, and modular component 204-3) from Figure 4B along with optional band combiner 310. Figure 4D is a perspective view of the exemplary remote unit 104 created from a plurality of modular components 204 (including modular component 204-1, modular component 204-2, and modular component 204-3) and optional band combiner 310 from Figure 4C. Figure 4E is a perspective view of a system having two separate remote unit 104 housings (remote unit housing 104-1 and remote unit housing 104-2) created from a plurality of modular components 204 (including modular component 204-1, modular component 204-2, and modular component 204-3) from Figure 4B, remote unit housing 104-1 having optional band combiner 310 and remote unit housing 104-1 not having an optional band combiner 310. In exemplary embodiments, the separate remote unit 104 housings include any combination of the elements of the remote units 104 described herein. In exemplary embodiments, the separate remote unit 104 housings embody a single remote unit spread between multiple housings. In exemplary embodiments, separate remote unit housings embody two separate remote units adjacent to one another.

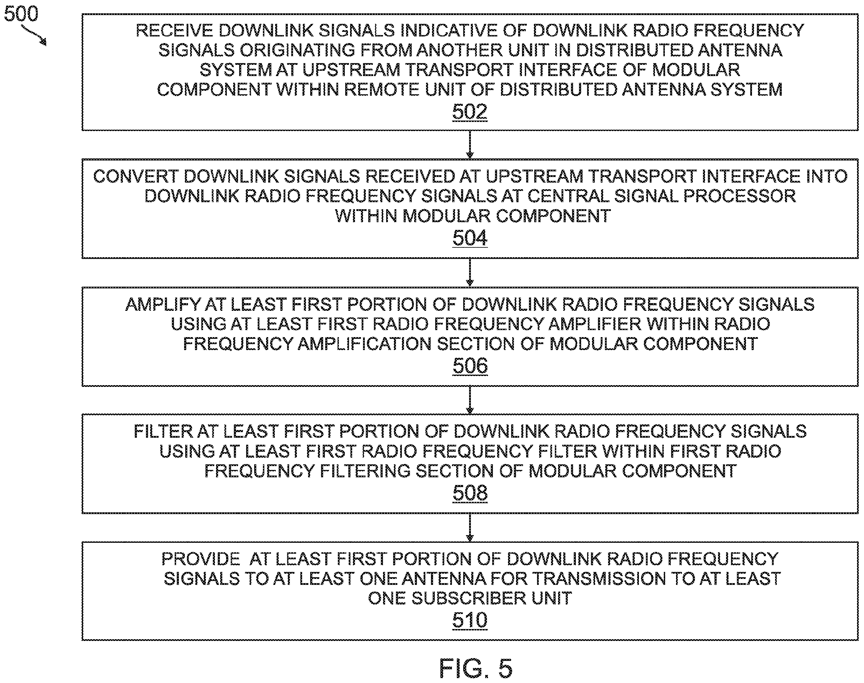

Figure 5 is a flow diagram illustrating one exemplary embodiment of a method 500 for utilizing a modular component within a remote unit of a distributed antenna system. Exemplary method 500 begins at block 502 with receiving downlink signals indicative of downlink radio frequency signals originating from another unit in the distributed antenna system at an upstream transport interface of a modular component within a remote unit of the distributed antenna system. Exemplary method 500 proceeds to block 504 with converting downlink signals received at the upstream transport interface into downlink radio frequency signals at a central signal processor within the modular component. Exemplary method 500 proceeds to block 506 with amplifying at least a first portion of the downlink radio frequency signals using at least a first radio frequency amplifier within a radio frequency amplification section of the modular component. Exemplary method 500 proceeds to block 508 with filtering at least the first portion of the downlink radio frequency signals using at least a first radio frequency filter within a first radio frequency filtering section of the modular component. Exemplary method 500 proceeds to block 510 with providing the at least the first portion of the downlink radio frequency signals to at least one antenna for transmission to at least one subscriber unit.

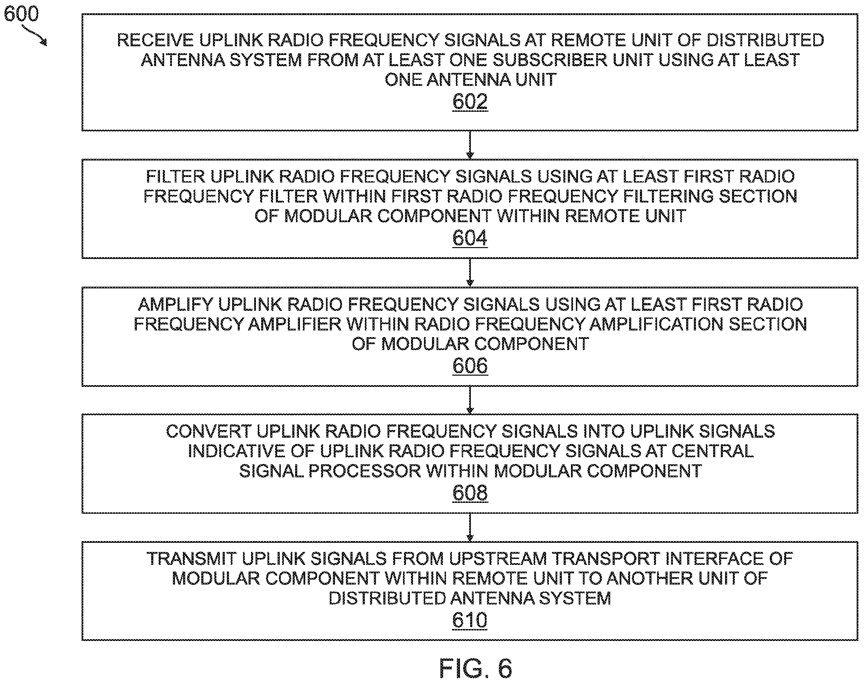

Figure 6 is a flow diagram illustrating one exemplary embodiment of a method 600 for utilizing a modular component within a remote unit of a distributed antenna system. Exemplary method 600 begins at block 602 with receiving uplink radio frequency signals at a remote unit of a distributed antenna system from at least one subscriber unit using at least one antenna unit. Exemplary method 600 proceeds to block 604 with filtering the uplink radio frequency signals using at least a first radio frequency filter within a first radio frequency filtering section of a modular component within the remote unit. Exemplary method 600 proceeds to block 606 with amplifying the uplink radio frequency signals using at least a first radio frequency amplifier within a radio frequency amplification section of the modular component. Exemplary method 600 proceeds to block 608 with converting the uplink radio frequency signals into uplink signals indicative of the uplink radio frequency signals at a central signal processor within the modular component. Exemplary method 600 proceeds to block 610 with transmitting the uplink signals from an upstream transport interface of a modular component within a remote unit to another unit of the distributed antenna system.

Any of the units, devices, processors, etc. described herein may implement at least some of the processing described herein. In exemplary embodiments, any of the units, devices, processors, etc. described herein include circuitry and/or a programmable processor, such as a microcontroller, an application-specific integrated circuit (ASIC), a field-programmable gate array (FPGA), a field-programmable object array (FPOA), or a programmable logic device (PLD). The units, devices, processors, etc. described herein may include or function with software programs, firmware or other computer readable instructions for carrying out various methods, process tasks, calculations, and control functions, described herein. These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor- readable media may also include transmission media such as electrical, electromagnetic, or digital signals, conveyed via a communication medium such as a network and/or a wireless link.

## Claims

1. A primary modular component (204-1) for interconnection with at least one secondary modular component (204-2) to form a scalable remote unit (104) of a distributed antenna system (102), the primary modular component (204-1) comprising:
an upstream transport interface (302) configured to:
receive downlink signals indicative of downlink radio frequency signals within a downlink spectrum originating from another unit (108) in the distributed antenna system (102);
a central signal processor (304) communicatively coupled to the upstream transport interface (302) and configured to:
convert the downlink signals received at the upstream transport interface (302) into the downlink radio frequency signals within the downlink spectrum;
a radio frequency amplification section (306) communicatively coupled to the central signal processor (304) and configured to:
amplify at least a first portion of the downlink radio frequency signals using at least a first radio frequency amplifier (326);
a radio frequency filtering section (308) communicatively coupled to the radio frequency amplification section (306) and configured to:
filter the at least the first portion of the downlink radio frequency signals using at least a first radio frequency filter; and
provide the at least the first portion of the downlink radio frequency signals to at least one antenna (120) for transmission to at least one subscriber unit (106); and
wherein the primary modular component (204-1) is configured to be interconnected with the at least one secondary modular component (204-2) to form the scalable remote unit (104) of the distributed antenna system (102) by being configured to be:
a) mounted to the at least one secondary modular component by physical connection using at least one fastener, wherein the at least one secondary modular component is mechanically compatible with the primary modular component; and
b) electrically interconnected with the at least one secondary modular component using at least one interlink, wherein the at least one secondary modular component is electrically compatible with the primary modular component;
wherein the at least one secondary modular component can be added to the scalable remote unit (104) during expansion of the distributed antenna system to: c) add new bands to the scalable remote unit; or d) increase output power of the scalable remote unit.

2. The primary modular component (204-1) of claim 1, wherein:
the radio frequency amplification section (306) is further configured to:
amplify at least a second portion of the downlink radio frequency signals using at least a second radio frequency amplifier (326); and
the radio frequency filtering section (308) is further configured to:
filter the at least the second portion of the downlink radio frequency signals using at least a second radio frequency filter; and
provide the at least the second portion of the downlink radio frequency signals to the at least one antenna (120) for transmission to the at least one subscriber unit (106).

3. The primary modular component (204-1) of claim 2, further comprising:
a combining device (310) communicatively coupled between the radio frequency filtering section (308) and the at least one antenna (120); and
wherein the radio frequency filtering section (308) is configured to:
provide the at least the first portion of the downlink radio frequency signals to the combining device (310) using a first signal path;
provide the at least the second portion of the downlink radio frequency signals to the combining device (310) using a second signal path; and
wherein the combining device (310) is configured to:
combine the at least the first portion of the downlink radio frequency signals with the second portion of the downlink radio frequency signals into a combined downlink radio frequency signal; and
provide the combined downlink radio frequency signal to the at least one antenna (120) for transmission to the at least one subscriber unit (106).

4. The primary modular component (204-1) of any of claims 1-3, further comprising:
a downstream transport interface (312) configured to provide the downlink signals indicative of the downlink radio frequency signals within the downlink spectrum to at least a second modular component (204) for installation within one of a plurality of scalable remote units (104) of the distributed antenna system (102).

5. A primary modular component (204-1) for interconnection with at least one secondary modular component (204-2) to form a scalable remote unit (104) of a distributed antenna system (102), the primary modular component (204-1) comprising:
a radio frequency filtering section (308) configured to receive and filter uplink radio frequency signals from at least one subscriber unit (106) using at least one antenna (120);
a radio frequency amplification section (306) communicatively coupled to the radio frequency filtering section (308) and configured to amplify the uplink radio frequency signals;
a central signal processor (304) communicatively coupled to the radio frequency amplification section (306) and configured to convert the uplink radio frequency signals into uplink signals indicative of the uplink radio frequency signals within an uplink spectrum;
an upstream transport interface (302) configured to receive the uplink signals from the central signal processor (304) and to transport the uplink signals to another unit (108) in the distributed antenna system (102); and
wherein the primary modular component (204-1) is configured to be interconnected with the at least one secondary modular component (204-2) to form the scalable remote unit (104) of the distributed antenna system (102) by being configured to be:
a) mounted to the at least one secondary modular component by physical connection using at least one fastener, wherein the at least one secondary modular component is mechanically compatible with the primary modular component; and
b) electrically interconnected with the at least one secondary modular component using at least one interlink, wherein the at least one secondary modular component is electrically compatible with the primary modular component;
wherein the at least one secondary modular component can be added to the scalable remote unit (104) during expansion of the distributed antenna system to: c) add new bands to the scalable remote unit; or d) increase output power of the scalable remote unit.

6. The primary modular component (204-1) of claim 5, wherein:
the radio frequency filtering section (308) is further configured to receive and filter second uplink radio frequency signals from at least one second subscriber unit (106) using at least one second antenna (120);
the radio frequency amplification section (306) is further configured to amplify the second uplink radio frequency signals;
the central signal processor (304) is further configured to convert the second uplink radio frequency signals into second uplink signals indicative of the second uplink radio frequency signals within the uplink spectrum; and
the upstream transport interface (302) is further configured to receive the second uplink signals from the central signal processor (304) and transport the uplink signals to a second another unit (108) in the distributed antenna system (102).

7. The primary modular component (204-1) of any of claims 5-6, further comprising:
a downstream transport interface (312) configured to receive second uplink signals indicative of second uplink radio frequency signals within the uplink spectrum from a second module component for installation within one of a plurality of scalable remote units (104) of the distributed antenna system (102).

8. The primary modular component (204-1) of any of claims 1-7, wherein the central signal processor (304) is configured to control attributes of the radio frequency amplification section (306) and the radio frequency filtering section (308).

9. The primary modular component (204-1) of any of claims 1-8, further comprising:
a power supply (322) configured to provide power to the upstream transport interface (302), the central signal processor (304), the radio frequency amplification section (306), and the radio frequency filtering section (308).

10. The primary modular component (204-1) of any of claims 1-9, wherein the radio frequency filtering section (308) is communicatively coupled to the at least one antenna (120).

11. The primary modular component (204-1) of any of claims 1-10, wherein the primary modular component (204-1) is configured to be physically interconnected with the at least one secondary modular component (204-2) within a housing to form the scalable remote unit (104) of the distributed antenna system (102).

12. A scalable remote unit (104) of a distributed antenna system (102), the scalable remote unit (104) comprising:
the primary modular component (204-1) of any of claims 1-11.

## Patentansprüche

1. Eine primäre modulare Komponente (204-1) zur Zusammenschaltung mit zumindest einer sekundären modularen Komponente (204-2), um eine skalierbare Ferneinheit (104) eines verteilten Antennensystems (102) zu bilden, wobei die primäre modulare Komponente (204-1) umfasst:
eine Upstream-Transportschnittstelle (302), konfiguriert zum:
Empfangen von Downlink-Signalen, die Downlink-Hochfrequenzsignale innerhalb eines Downlink-Spektrums angeben, die von einer anderen Einheit (108) in dem verteilten Antennensystem (102) stammen;
einen zentralen Signalprozessor (304), der kommunikativ mit der Upstream-Transportschnittstelle (302) gekoppelt und konfiguriert ist zum:
Umwandeln der an der Upstream-Transportschnittstelle (302) empfangenen Downlink-Signale in die Downlink-Hochfrequenzsignale innerhalb des Downlink-Spektrums;
einen Hochfrequenz-Verstärkungsabschnitt (306), der kommunikativ mit dem zentralen Signalprozessor (304) gekoppelt und konfiguriert ist zum:
Verstärken zumindest eines ersten Teils der Downlink-Hochfrequenzsignale unter Verwendung zumindest eines ersten Hochfrequenzverstärkers (326);
einen Hochfrequenz-Filterabschnitt (308), der kommunikativ mit dem Hochfrequenz-Verstärkungsabschnitt (306) gekoppelt und konfiguriert ist zum:
Filtern des zumindest ersten Teils der Downlink-Hochfrequenzsignale unter Verwendung zumindest eines ersten Hochfrequenzfilters; und
Bereitstellen des zumindest ersten Teils der Downlink-Hochfrequenzsignale an zumindest eine Antenne (120) zur Übertragung an zumindest eine Teilnehmereinheit (106); und
wobei die primäre modulare Komponente (204-1) zur Zusammenschaltung mit der zumindest einen sekundären modularen Komponente (204-2) konfiguriert ist, um die skalierbare Ferneinheit (104) des verteilten Antennensystems (102) zu bilden, indem sie konfiguriert ist zum:
a) Befestigen an der zumindest einen sekundären modularen Komponente durch physische Verbindung unter Verwendung zumindest eines Befestigungselements, wobei die zumindest eine sekundäre modulare Komponente mechanisch mit der primären modularen Komponente kompatibel ist; und
b) elektrischen Zusammenschalten mit der zumindest einen sekundären modularen Komponente unter Verwendung zumindest einer Zwischenverbindung, wobei die zumindest eine sekundäre modulare Komponente elektrisch mit der primären modularen Komponente kompatibel ist;
wobei die zumindest eine sekundäre modulare Komponente während der Erweiterung des verteilten Antennensystems zu der skalierbaren Ferneinheit (104) hinzugefügt werden kann, um: c) neue Bänder zu der skalierbaren Ferneinheit hinzuzufügen; oder d) die Ausgangsleistung der skalierbaren Ferneinheit zu erhöhen.

2. Primäre modulare Komponente (204-1) nach Anspruch 1, wobei:
der Hochfrequenz-Verstärkungsabschnitt (306) ferner konfiguriert ist zum:
Verstärken zumindest eines zweiten Teils der Downlink-Hochfrequenzsignale unter Verwendung zumindest eines zweiten Hochfrequenzverstärkers (326); und
der Hochfrequenz-Filterabschnitt (308) ferner konfiguriert ist zum:
Filtern des zumindest zweiten Teils der Downlink-Hochfrequenzsignale unter Verwendung zumindest eines zweiten Hochfrequenzfilters; und
Bereitstellen des zumindest zweiten Teils der Downlink-Hochfrequenzsignale an die zumindest eine Antenne (120) zur Übertragung an die zumindest eine Teilnehmereinheit (106).

3. Primäre modulare Komponente (204-1) nach Anspruch 2, ferner umfassend:
eine Kombinationsvorrichtung (310), die kommunikativ zwischen dem Hochfrequenz-Filterabschnitt (308) und der zumindest einen Antenne (120) gekoppelt ist; und
wobei der Hochfrequenz-Filterabschnitt (308) ferner konfiguriert ist zum:
Bereitstellen des zumindest ersten Teils der Downlink-Hochfrequenzsignale an die Kombinationsvorrichtung (310) unter Verwendung eines ersten Signalpfads;
Bereitstellen des zumindest zweiten Teils der Downlink-Hochfrequenzsignale an die Kombinationsvorrichtung (310) unter Verwendung eines zweiten Signalpfads; und
wobei die Kombinationsvorrichtung (310) konfiguriert ist zum:
Kombinieren des zumindest ersten Teils der Downlink-Hochfrequenzsignale mit dem zweiten Teil der Downlink-Hochfrequenzsignale zu einem kombinierten Downlink-Hochfrequenzsignal; und
Bereitstellen des kombinierten Downlink-Hochfrequenzsignals an die zumindest eine Antenne (120) zur Übertragung an die zumindest eine Teilnehmereinheit (106).

4. Primäre modulare Komponente (204-1) nach einem der Ansprüche 1 bis 3, ferner umfassend:
eine Downstream-Transportschnittstelle (312), die zum Bereitstellen der Downlink-Signale, die die Downlink-Hochfrequenzsignale innerhalb des Downlink-Spektrums angeben, an zumindest eine zweite modulare Komponente (204) zur Installation innerhalb einer aus einer Vielzahl von skalierbaren Ferneinheiten (104) des verteilten Antennensystems (102) konfiguriert ist.

5. Eine primäre modulare Komponente (204-1) zur Zusammenschaltung mit zumindest einer sekundären modularen Komponente (204-2), um eine skalierbare Ferneinheit (104) eines verteilten Antennensystems (102) zu bilden, wobei die primäre modulare Komponente (204-1) umfasst:
einen Hochfrequenz-Filterabschnitt (308), der zum Empfangen und Filtern von Uplink-Hochfrequenzsignalen von zumindest einer Teilnehmereinheit (106) unter Verwendung von zumindest einer Antenne (120) konfiguriert ist;
einen Hochfrequenz-Verstärkungsabschnitt (306), der kommunikativ mit dem Hochfrequenz-Filterabschnitt (308) gekoppelt und zum Verstärken der Uplink-Hochfrequenzsignale konfiguriert ist;
einen zentralen Signalprozessor (304), der kommunikativ mit dem Hochfrequenz-Verstärkungsabschnitt (306) gekoppelt und zum Umwandeln der Uplink-Hochfrequenzsignale in Uplink-Signale konfiguriert ist, die die Uplink-Hochfrequenzsignale innerhalb eines Uplink-Spektrums angeben;
eine Upstream-Transportschnittstelle (302), die zum Empfangen der Uplink-Signale von dem zentralen Signalprozessor (304) und zum Transportieren der Uplink-Signale zu einer anderen Einheit (108) in dem verteilten Antennensystem (102) konfiguriert ist; und
wobei die primäre modulare Komponente (204-1) zur Zusammenschaltung mit der zumindest einen sekundären modularen Komponente (204-2) konfiguriert ist, um die skalierbare Ferneinheit (104) des verteilten Antennensystems (102) zu bilden, indem sie konfiguriert ist zum:
a) Befestigen an der zumindest einen sekundären modularen Komponente durch physische Verbindung unter Verwendung zumindest eines Befestigungselements, wobei die zumindest eine sekundäre modulare Komponente mechanisch mit der primären modularen Komponente kompatibel ist; und
b) elektrischen Zusammenschalten mit der zumindest einen sekundären modularen Komponente unter Verwendung zumindest einer Zwischenverbindung, wobei die zumindest eine sekundäre modulare Komponente elektrisch mit der primären modularen Komponente kompatibel ist;
wobei die zumindest eine sekundäre modulare Komponente während der Erweiterung des verteilten Antennensystems zu der skalierbaren Ferneinheit (104) hinzugefügt werden kann, um: c) neue Bänder zu der skalierbaren Ferneinheit hinzuzufügen; oder d) die Ausgangsleistung der skalierbaren Ferneinheit zu erhöhen.

6. Primäre modulare Komponente (204-1) nach Anspruch 5, wobei:
der Hochfrequenz-Filterabschnitt (308) ferner zum Empfangen und Filtern von zweiten Uplink-Hochfrequenzsignalen von zumindest einer zweiten Teilnehmereinheit (106) unter Verwendung zumindest einer zweiten Antenne (120) konfiguriert ist;
der Hochfrequenz-Verstärkungsabschnitt (306) ferner zum Verstärken der zweiten Uplink-Hochfrequenzsignale konfiguriert ist;
der zentrale Signalprozessor (304) ferner zum Umwandeln der zweiten Uplink-Hochfrequenzsignale in zweite Uplink-Signale konfiguriert ist, die die zweiten Uplink-Hochfrequenzsignale innerhalb des Uplink-Spektrums angeben; und
die Upstream-Transportschnittstelle (302) ferner zum Empfangen der zweiten Uplink-Signale von dem zentralen Signalprozessor (304) und zum Transportieren der Uplink-Signale zu einer zweiten anderen Einheit (108) in dem verteilten Antennensystem (102) konfiguriert ist.

7. Primäre modulare Komponente (204-1) nach einem der Ansprüche 5 bis 6, ferner umfassend:
eine Downstream-Transportschnittstelle (312), die zum Empfangen von zweiten Uplink-Hochfrequenzsignalen, die zweite Uplink-Hochfrequenzsignale innerhalb des Uplink-Spektrums angeben, von einer zweiten modularen Komponente zur Installation innerhalb einer aus einer Vielzahl von skalierbaren Ferneinheiten (104) des verteilten Antennensystems (102) konfiguriert ist.

8. Primäre modulare Komponente (204-1) nach einem der Ansprüche 1 bis 7, wobei der zentrale Signalprozessor (304) zum Steuern von Attributen des Hochfrequenz-Verstärkungsabschnitts (306) und des Hochfrequenz-Filterabschnitts (308) konfiguriert ist.

9. Primäre modulare Komponente (204-1) nach einem der Ansprüche 1 bis 8, ferner umfassend:
eine Stromversorgung (322), die zur Bereitstellung von Strom an die Upstream-Transportschnittstelle (302), den zentralen Signalprozessor (304), den Hochfrequenz-Verstärkungsabschnitt (306) und den Hochfrequenz-Filterabschnitt (308) konfiguriert ist.

10. Primäre modulare Komponente (204-1) nach einem der Ansprüche 1 bis 9, wobei der Hochfrequenz-Filterabschnitt (308) kommunikativ mit der zumindest einen Antenne (120) gekoppelt ist.

11. Primäre modulare Komponente (204-1) nach einem der Ansprüche 1 bis 10, wobei die primäre modulare Komponente (204-1) zum physischen Verbinden mit der zumindest einen sekundären modularen Komponente (204-2) innerhalb eines Gehäuses konfiguriert ist, um die skalierbare Ferneinheit (104) des verteilten Antennensystems (102) zu bilden.

12. Skalierbare Ferneinheit (104) eines verteilten Antennensystems (102), wobei die skalierbare Ferneinheit (104) umfasst:
die primäre modulare Komponente (204-1) nach einem der Ansprüche 1 bis 11.

## Revendications

1. Composant modulaire primaire (204-1) pour une interconnexion avec au moins un composant modulaire secondaire (204-2) afin de former une unité distante évolutive (104) d'un système d'antennes distribuées (102), le composant modulaire primaire (204-1) comprenant :
une interface de transport amont (302) configurée pour :
recevoir des signaux de liaison descendante indicatifs de signaux radiofréquence de liaison descendante au sein d'un spectre de liaison descendante provenant d'une autre unité (108) dans le système d'antennes distribuées (102) ;
un processeur de signal central (304) couplé en communication à l'interface de transport amont (302) et configuré pour :
convertir les signaux de liaison descendante reçus au niveau de l'interface de transport amont (302) en signaux radiofréquence de liaison descendante au sein du spectre de liaison descendante ;
une section d'amplification radiofréquence (306) couplée en communication au processeur de signal central (304) et configurée pour :
amplifier au moins une première partie des signaux radiofréquence de liaison descendante à l'aide d'au moins un premier amplificateur radiofréquence (326) ;
une section de filtrage radiofréquence (308) couplée en communication à la section d'amplification radiofréquence (306) et configurée pour :
filtrer l'au moins première partie des signaux radiofréquence de liaison descendante à l'aide d'au moins un premier filtre radiofréquence ; et
fournir l'au moins première partie des signaux radiofréquence de liaison descendante à au moins une antenne (120) pour une transmission à au moins une unité d'abonné (106) ; et
dans lequel le composant modulaire primaire (204-1) est configuré pour être interconnecté avec l'au moins un composant modulaire secondaire (204-2) afin de former l'unité distante évolutive (104) du système d'antennes distribuées (102) en étant configuré pour être :
a) monté sur l'au moins un composant modulaire secondaire par connexion physique à l'aide d'au moins un élément de fixation, dans lequel l'au moins un composant modulaire secondaire est compatible mécaniquement avec le composant modulaire primaire ; et
b) interconnecté électriquement avec l'au moins un composant modulaire secondaire à l'aide d'au moins une liaison, dans lequel l'au moins un composant modulaire secondaire est compatible électriquement avec le composant modulaire primaire ;
dans lequel l'au moins un composant modulaire secondaire peut être ajouté à l'unité distante évolutive (104) pendant l'extension du système d'antennes distribuées pour : c) ajouter de nouvelles bandes à l'unité distante évolutive ; ou d) augmenter la puissance de sortie de l'unité distante évolutive.

2. Composant modulaire primaire (204-1) selon la revendication 1, dans lequel :
la section d'amplification radiofréquence (306) est en outre configurée pour :
amplifier au moins une deuxième partie des signaux radiofréquence de liaison descendante à l'aide d'au moins un deuxième amplificateur radiofréquence (326) ; et
la section de filtrage radiofréquence (308) est en outre configurée pour :
filtrer l'au moins une deuxième partie des signaux radiofréquence de liaison descendante à l'aide d'au moins un deuxième filtre radiofréquence ; et
fournir l'au moins une deuxième partie des signaux radiofréquence de liaison descendante à l'au moins une antenne (120) pour une transmission à l'au moins une unité d'abonné (106).

3. Composant modulaire primaire (204-1) selon la revendication 2, comprenant en outre :
un dispositif de combinaison (310) couplé en communication entre la section de filtrage radiofréquence (308) et l'au moins une antenne (120) ; et
dans lequel la section de filtrage radiofréquence (308) est configurée pour :
fournir l'au moins une première partie des signaux radiofréquence de liaison descendante au dispositif de combinaison (310) à l'aide d'une première voie de signal ;
fournir l'au moins une deuxième partie des signaux radiofréquence de liaison descendante au dispositif de combinaison (310) à l'aide d'une deuxième voie de signal ; et
dans lequel le dispositif de combinaison (310) est configuré pour :
combiner l'au moins une première partie des signaux radiofréquence de liaison descendante à la deuxième partie des signaux radiofréquence de liaison descendante en un signal radiofréquence de liaison descendante combiné ; et
fournir le signal radiofréquence de liaison descendante combiné à l'au moins une antenne (120) pour une transmission à l'au moins une unité d'abonné (106).

4. Composant modulaire primaire (204-1) selon l'une quelconque des revendications 1 à 3, comprenant en outre :
une interface de transport aval (312) configurée pour fournir les signaux de liaison descendante indicatifs des signaux radiofréquence de liaison descendante au sein du spectre de liaison descendante à au moins un deuxième composant modulaire (204) pour une installation au sein de l'une d'une pluralité d'unités distantes évolutives (104) du système d'antennes distribuées (102).

5. Composant modulaire primaire (204-1) pour une interconnexion avec au moins un composant modulaire secondaire (204-2) afin de former une unité distante évolutive (104) d'un système d'antennes distribuées (102), le composant modulaire primaire (204-1) comprenant :
une section de filtrage radiofréquence (308) configurée pour recevoir et filtrer des signaux radiofréquence de liaison montante provenant d'au moins une unité d'abonné (106) à l'aide d'au moins une antenne (120) ;
une section d'amplification radiofréquence (306) couplée en communication à la section de filtrage radiofréquence (308) et configurée pour amplifier les signaux radiofréquence de liaison montante ;
un processeur de signal central (304) couplé en communication à la section d'amplification radiofréquence (306) et configuré pour convertir les signaux radiofréquence de liaison montante en signaux de liaison montante indicatifs des signaux radiofréquence de liaison montante au sein d'un spectre de liaison montante ;
une interface de transport amont (302) configurée pour recevoir les signaux de liaison montante provenant du processeur de signal central (304) et transporter les signaux de liaison montante vers une autre unité (108) dans le système d'antennes distribuées (102) ; et
dans lequel le composant modulaire primaire (204-1) est configuré pour être interconnecté avec l'au moins un composant modulaire secondaire (204-2) afin de former l'unité distante évolutive (104) du système d'antennes distribuées (102) en étant configuré pour être :
a) monté sur l'au moins un composant modulaire secondaire par connexion physique à l'aide d'au moins un élément de fixation, dans lequel l'au moins un composant modulaire secondaire est compatible mécaniquement avec le composant modulaire primaire ; et
b) interconnecté électriquement avec l'au moins un composant modulaire secondaire à l'aide d'au moins une liaison, dans lequel l'au moins un composant modulaire secondaire est compatible électriquement avec le composant modulaire primaire ;
dans lequel l'au moins un composant modulaire secondaire peut être ajouté à l'unité distante évolutive (104) pendant l'extension du système d'antennes distribuées pour : c) ajouter de nouvelles bandes à l'unité distante évolutive ; ou d) augmenter la puissance de sortie de l'unité distante évolutive.

6. Composant modulaire primaire (204-1) selon la revendication 5, dans lequel :
la section de filtrage radiofréquence (308) est en outre configurée pour recevoir et filtrer des deuxièmes signaux radiofréquence de liaison montante provenant d'au moins une deuxième unité d'abonné (106) à l'aide d'au moins une deuxième antenne (120) ;
la section d'amplification radiofréquence (306) est en outre configurée pour amplifier les deuxièmes signaux radiofréquence de liaison montante ;
le processeur de signal central (304) est en outre configuré pour convertir les deuxièmes signaux radiofréquence de liaison montante en deuxièmes signaux de liaison montante indicatifs des deuxièmes signaux radiofréquence de liaison montante au sein du spectre de liaison montante ; et
l'interface de transport amont (302) est en outre configurée pour recevoir les deuxièmes signaux de liaison montante provenant du processeur de signal central (304) et transporter les signaux de liaison montante vers une deuxième autre unité (108) dans le système d'antennes distribuées (102).

7. Composant modulaire primaire (204-1) selon l'une quelconque des revendications 5 et 6, comprenant en outre :
une interface de transport aval (312) configurée pour recevoir des deuxièmes signaux de liaison montante indicatifs de deuxièmes signaux radiofréquence de liaison montante au sein du spectre de liaison montante provenant d'un deuxième composant de module pour une installation au sein de l'une d'une pluralité d'unités distantes évolutives (104) du système d'antennes distribuées (102).

8. Composant modulaire primaire (204-1) selon l'une quelconque des revendications 1 à 7, dans lequel le processeur de signal central (304) est configuré pour commander des attributs de la section d'amplification radiofréquence (306) et de la section de filtrage radiofréquence (308).

9. Composant modulaire primaire (204-1) selon l'une quelconque des revendications 1 à 8, comprenant en outre :
une alimentation de puissance (322) configurée pour fournir de la puissance à l'interface de transport amont (302), au processeur de signal central (304), à la section d'amplification radiofréquence (306) et à la section de filtrage radiofréquence (308).

10. Composant modulaire primaire (204-1) selon l'une quelconque des revendications 1 à 9, dans lequel la section de filtrage radiofréquence (308) est couplée en communication à l'au moins une antenne (120).

11. Composant modulaire primaire (204-1) selon l'une quelconque des revendications 1 à 10, dans lequel le composant modulaire primaire (204-1) est configuré pour être interconnecté physiquement à l'au moins un composant modulaire secondaire (204-2) au sein d'un boîtier afin de former l'unité distante évolutive (104) du système d'antennes distribuées (102).

12. Unité distante évolutive (104) d'un système d'antennes distribuées (102), l'unité distante évolutive (104) comprenant :
le composant modulaire primaire (204-1) de l'une quelconque des revendications 1 à 11.
